Europäisches Patentamt

European Patent Office

Office européen des brevets

(11) Veröffentlichungsnummer: **0 072 423**
**B1**

(12) # EUROPÄISCHE PATENTSCHRIFT

(45) Veröffentlichungstag der Patentschrift:
**22.03.89**

(51) Int. Cl.⁴: **G 02 B 6/44**

(21) Anmeldenummer: **82106022.5**

(22) Anmeldetag: **06.07.82**

(54) **Optisches Nachrichtenkabel.**

(30) Priorität: **13.08.81 DE 3132058**
**21.04.82 DE 3214778**

(43) Veröffentlichungstag der Anmeldung:
**23.02.83 Patentblatt 83/8**

(45) Bekanntmachung des Hinweises auf die Patenterteilung:
**22.03.89 Patentblatt 89/12**

(84) Benannte Vertragsstaaten:
**AT BE CH LI**

(56) Entgegenhaltungen:
**DD-A- 127 317**
**DE-A- 2 632 634**
**DE-A- 2 817 045**
**DE-A- 2 825 845**
**DE-B- 2 513 722**

(73) Patentinhaber: **Philips Kommunikations Industrie AG,
Thurn-und-Taxis-Strasse 10, D-8500 Nürnberg 10 (DE)**

(72) Erfinder: **Bruggendieck, Siegfried, Dipl.-Ing.,
Amselweg 20, D-5608 Radevormwald (DE)**

(74) Vertreter: **Meier, Friedrich, Dipl.-Ing., Philips
Patentverwaltung GmbH
Wendenstrasse 35 Postfach 10 51 49,
D-2000 Hamburg 1 (DE)**

## Beschreibung

Die vorliegende Erfindung bezieht sich auf ein optisches Nachrichtenkabel, bestehend aus einer Kabelseele mit Lichtwellenleitern und einem diese umschließenden Außenmantel, der aus in ein Bindemittel aus Kunststoff eingebetteten, zugaufnehmenden Glasfaserelementen besteht, die zu mindestens einem Strang zusammengefaßt sind, der von einer Mantelschicht umgeben ist.

Es ist bekannt, zur Zugentlastung in Kunststoffmänteln von optischen Nachrichtenkabeln, insbesondere Luftkabeln, Glasgarnbündel anzuordnen. Diese Konstruktion ist bereits seit Jahren im Einsatz. Für Kabel mit Lichtwellenleitern zeigten sich die bei Mänteln aus Thermoplasten wie Polyäthylen bekannten Schrumpfeffekte, die unter ungünstigen Umständen zu einem Dämpfungsanstieg oder sogar zu einem Bruch der Lichtwellenleiter in der Kabelseele führen können.

Eine Anordnung der eingangs genannten Art ist durch die DE-A 2 632 634 bekannt. Dort sind zwischen einem Innenrohrteil und einem Außenrohrteil des Mantels in Kunstharz eingebettete Glasfaser-Verstärkungsglieder in einer solchen Menge vorgesehen, daß sie auf das optische Kabel ausgeübte Zugkräfte abfangen können.

Bei einer nach der DE-A 2 817 045 bekannten Anordnung sind mehrere Glasfaserstränge in Form von Rundbündeln gleichmäßig verteilt in einem Schutzmantel angeordnet.

Der vorliegenden Erfindung liegt nun die Aufgabe zugrunde, ausgehend von einem optischen Nachrichtenkabel der eingangs beschriebenen Art dieses derart zu verbessern, daß Schrumpfeffekte im Kabelmantel keinen Dämpfungsanstieg bzw. keinen Bruch der Lichtwellenleiter in der Kabelseele verursachen.

Erfindungsgemäß wird dies dadurch erreicht, daß der Volumenanteil der Glasfaserelemente im Strang mindestens 70% und im gesamten Außenmantel mindestens 10% beträgt. Die Erfindung beruht auf der Erkenntnis, daß die im Kabelmantel enthaltenen Glasfaserstränge das Schub- und Zugverhalten des gesamten Kabels bestimmen, so daß das Schubverhalten insbesondere auch des Mantels demjenigen der Lichtwellenleiter in der Kabelseele angepaßt ist. Im Gegensatz zu den bekannten Kabelkonstruktionen basiert die Erfindung darauf, daß es nicht alleine darauf ankommt, daß im Kabelmantel zugaufnehmende Elemente sind, vielmehr müssen die im Kabelmantel vorhandenen Glasfaserelemente auch geeignet sein, das Schubverhalten des Kabels derart zu beeinflussen, daß das Schrumpfverhalten des Kabelmantels demjenigen der Lichtleitfasern in der Kabelseele entspricht. Zweckmäßigerweise beträgt der Volumenanteil der Glasfasern in den Strängen 80%.

In vorteilhafter Ausgestaltung der Erfindung kann der Glasfaserstrang als ein den Kabelmantel im wesentlichen bildendes Rohr ausgebildet sein, das somit anstelle einer äußeren Bewehrung tritt.

Alternativ kann es ebenfalls zweckmäßig sein, wenn die Glasfaserstränge gemäß der Erfindung als Runddrähte ausgebildet sind. Diese können parallel zur Kabellängsachse verlaufen oder aber verstellt sein.

Weitere vorteilhafte Ausgestaltungen der Erfindung sind in den Unteransprüchen 3, 4, 7 bis 11 enthalten.

Anhand der in den beiliegenden Zeichnungen dargestellten Ausführungsbeispiele wird die Erfindung nun näher erläutert. Es zeigen:

Fig. 1 einen Schnitt durch ein erfindungsgemäßes optisches Nachrichtenkabel,

Fig. 2 einen Schnitt durch eine weitere Ausgestaltung eines erfindungsgemäßen Nachrichtenkabels,

Fig. 3 einen Schnitt durch ein erfindungsgemäßes Kabel in prinzipieller Darstellung,

Fig. 4 einen Schnitt durch eine weitere Ausfürungsform eines erfindungsgemäßen Kabels in prinzipieller Darstellung.

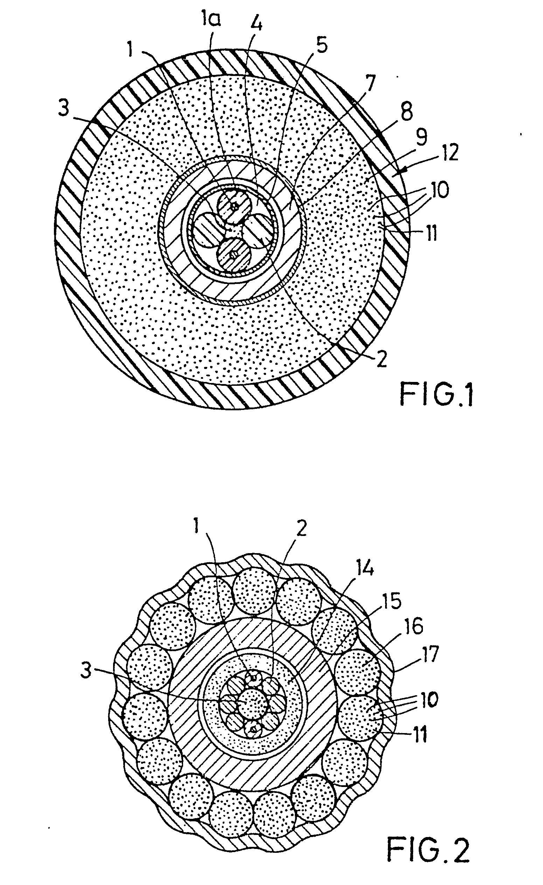

Wie sich aus Fig. 1 ergibt, besteht ein optisches Nachrichtenkabel z.B. aus zwei Lichtwellenleitern 1, die beispielsweise mit einem festen Kunststoffcoating umgeben sind. Die Lichtwellenleiter 1 sind mit zwei Kunststofftrensen 2 um eine Kerntrense 3 verstellt. Das so entstandene Seil 4 ist mit einer Folie 5 aus gut gleitfähigem Kunststoff umwickelt, die von einem Schlauch 7 umgeben ist. Hierdurch wird ein bestmöglicher Schutz gegen alle auftretenden Arten von mechanischen Beanspruchungen, z.B. Biege- und Schwingungsbeanspruchungen und Querkräften erreicht. Der Schlauch 7 besteht vorzugsweise aus Polyvenylidenfluorid. Der Schlauch 7 schließt die Kabelseele ab.

Den Außenmantel des Kabels bildet im wesentlichen ein Rohr 9, das aus unidirektional verbundenen Glasfasern 10 besteht, die durch ein Bindemittel 11 aus insbesondere Polyesterharz gefestigt bzw. vergossen sind. Der Volumenanteil der Glasfasern 10 im Rohr (9) beträgt mindestens 70%, vorzugsweise 80%. Die Glasfasern 10 haben vorzugsweise einen Durchmesser von 23 μm und bestehen aus E-Glas. E-Glas ist alkaliarmes, wasserbeständiges Borozilikatglas mit weniger als 1% $K_2O + Na_2O$. Durch Verwendung von Gläsern mit höherem E-Modul als E-Glas läßt sich noch eine Verbesserung des Elastizitätsmoduls des Rohres 9 erreichen. Der thermische Ausdehnungskoeffizient des Rohres 9 beträgt etwa $10 \times 10^{-6}$/°C. Die Wandstärke des Rohres beträgt ca. 2 mm. Zwischen dem Rohr 9 und der darunter liegenden Kabelseele ist eine Trennfolie 8 angeordnet. Das Rohr 9 nimmt die im Mantel auftretenden Schubbeanspruchungen insbesondere durch Schrumpfung und die Zugbelastung auf, wobei ein den Lichtwellenleiter-Fasern entsprechendes Verhalten erreicht wird, so daß ein Dämpfungsanstieg in den Lichtwellenleitern aufgrund von auftretenden Schrumpfspannungen vermieden werden kann. Das Rohr 9 ist von einer Mantelschicht 12 umgeben, die vorzugsweise aus Polypropylen besteht und etwa 0,6 mm dick ist. Diese Mantelschicht bezweckt einen Schutz gegen Witterungseinflüsse.

In Fig. 2 ist eine weitere Ausführungsform eines Kabels nach der Erfindung gezeigt. Dieses besteht wiederum beispielsweise aus zwei Lichtwellenleitern 1, die mit Kunststofftrensen 2 um eine Kerntrense 3 mit einer Schlaglänge von ca. 65 mm verseilt sind. Darüber befindet sich eine Beschichtung 14 aus einer Schaumfolie, die etwa 0,9 mm dick ist. Den äußeren Abschluß der Kabelseele bildet ein Schlauch 15 aus Hochdruck-Polyäthylen mit einer Dicke von 1,6 mm. Der Außenmantel wird von Strängen 16 gebildet, die wie das Rohr 9 gemäß Fig. 1, aus durch ein Bindemittel 11 verbundenen Glasfasern 10 bestehen. Die Stränge 16 haben z.B. einen Durchmesser von 2 mm und sind mit einer großen Schlaglänge z.B. 400 mm verseilt. Der Glasfaseranteil pro Strang beträgt wieder mindestens 70% Volumenanteil. Den äußeren Abschluß bildet wieder eine Mantelschicht 17 entsprechend der in Fig. 1. Das in Fig. 2 dargestellte Kabel besitzt einen Gesamtdurchmesser von ca. 14 mm. Es zeichnet sich wie das in Fig. 1 dargestellte Kabel dadurch aus, daß es vollständig metallfrei ist.

Beide in den Fig. 1 und 2 dargestellten Kabeltypen sind auf sehr hohe Zugbelastungen ausgelegt, woraus sich der große Volumenanteil des Glasfaserstrangmaterials im Kabelmantel erklärt.

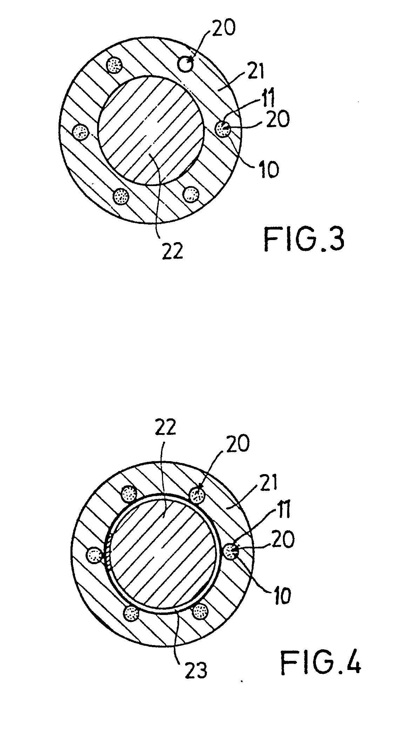

In Fig. 3 ist eine weitere Ausgestaltung eines Kabels nach der Erfindung dargestellt, wobei die zug- und schubaufnehmenden Verstärkungsstränge 20 wiederum aus Glasfasern 10 bestehen, die durch ein Bindemittel 11 verfestigt sind, und zwar entsprechend den Strängen der Fig. 2. Hierbei sind die Verstärkungsstränge 20 in einer Mantelschicht 21 eingebettet und schließen mit dieser die Kabelseele 22 ein. Die Glasfasern der Verstärkungsstränge 20 bilden pro Strang wiederum einen Volumenanteil von mindestens 70%. In diesem Fall ist das erfindungsgemäße Kabel nicht so sehr auf Zugbelastung ausgelegt, sondern derart, daß durch die Stränge die Schubbelastungen aufgenommen werden, da die Stränge praktisch als Korsett des Mantels dienen und deren Verhalten bestimmen.

In Fig. 4 ist eine weitere Möglichkeit der Ausführung eines erfindungsgemäßen Kabels gezeigt. Hierbei ist um die Kabelseele 22 eine als offene Wendel ausgebildete Seelenbewicklung 23 vorgesehen. Die Verstärkungsstränge 20 sind wiederum drahtförmig ausgebildet und entsprechend in ihrem Aufbau denen in Fig. 3. Diese Verstärkungsstränge 20 sind über der Seelenbewicklung 23 aufgebracht. Durch die offene Ausbildung der Seelenbewicklung 23 wird erreicht, daß die Verstärkungsstränge 20 zumindest teilweise von der Mantelschicht 21 eingeschlossen werden. Der Anteil, der durch ein Bindemittel verbundenen Glasfasern in den Verstärkungssträngen 20 beträgt wiederum mindestens 70%.

Die beschriebenen Kabel gemäß der Erfindung können als selbsttragende Luftkabel oder aber auch in bestimmten Anwendungsfällen als Erdkabel verwendet werden. Sie zeichnen sich durch eine hohe Spannweite bei hohem Volumenanteil der Glasfaserstränge aus und darüber hinaus dadurch, daß ihr Mantel ein temperaturkompensiertes Verhalten gegenüber den Lichtwellenleitern in der Kabelseele besitzt, so daß temperaturbedingte Schrumpfspannungen nicht zu einer Dämpfungserhöhung in den Lichtwellenleitern führt oder sogar einen Bruch derselben verursachen.

## Patentansprüche

1. Optisches Nachrichtenkabel, bestehend aus einer Kabelseele (1, 2, 3, 4, 5, 7; 1, 2, 3, 14, 15; 22) mit Lichtwellenleitern (1) und einem diese umschließenden Außenmantel (9, 12; 16, 17; 20, 21), der aus in ein Bindemittel (11) aus Kunststoff eingebetteten, zugaufnehmenden Glasfaserelementen (10) besteht, die zu mindestens einem Strang (9; 16; 20) zusammengefaßt sind, der von einer Mantelschicht (12; 17; 21) umgeben ist, dadurch gekennzeichnet, daß der Volumenanteil der Glasfaserelemente (10) im Strang (9; 16; 20) mindestens 70% und im gesamten Außenmantel (9, 12; 16, 17; 20, 21) mindestens 10% beträgt.

2. Nachrichtenkabel nach Anspruch 1, dadurch gekennzeichnet, daß die Glasfaserelemente (10) einen Volumenanteil von 80% im Strang (9; 16; 20) aufweisen.

3. Nachrichtenkabel nach Anspruch 1 oder 2, dadurch gekennzeichnet, daß die Glasfaserelemente (10) aus unidirektional verbundenen Glasfasern bestehen.

4. Nachrichtenkabel nach einem oder mehreren der Ansprüche 1 bis 3, dadurch gekennzeichnet, daß die Glasfaserelemente (10) aus E.-Glas bestehen.

5. Nachrichtenkabel nach einem oder mehreren der Ansprüche 1 bis 4, dadurch gekennzeichnet, daß der Strang (9, Fig. 1) rohrförmig um die Kabelseele angeordnet ist.

6. Nachrichtenkabel nach einem oder mehreren der Ansprüche 1 bis 4, dadurch gekennzeichnet, daß mehrere Stränge (16; 20), insbesondere als Runddrähte ausgebildet, im gleichmäßigen Abstand zueinander um die Kabelseele angeordnet sind.

7. Nachrichtenkabel nach Anspruch 6, dadurch gekennzeichnet, daß die Stränge (20) zumindest teilweise in der Mantelschicht (21) eingebettet sind.

8. Nachrichtenkabel nach einem oder mehreren der Ansprüche 1 bis 7, dadurch gekennzeichnet, daß als Bindemittel Polyester verwendet wird.

## Claims

1. An optical communication cable comprising a cable core (1, 2, 3, 4, 5, 7; 1, 2, 3, 14, 15; 22) having optical fibres (1) and an outer sheath (9, 12; 16, 17; 20, 21) surrounding the core, the outer sheath consisting of glass fibre elements (10) embedded in a synthetic resin binder (11), which take up tensile forces and which are formed into at least one strand (9; 16; 20) which is surrounded by a sheath (12; 17; 21), characterized in that the part by volume of the glass fibre elements (10) in the strand (9; 16; 20) is at least 70% and at least 10% in the entire outer sheath (9, 12; 16, 17; 20, 21).

2. A communication cable as claimed in Claim 1, characterized in that the glass fibre elements (10) constitute a part by volume of 80% in the strand (9, 16, 20).

3. A communication cable as claimed in Claim 1 or 2, characterized in that the glass fibre elements (10) consist of unidirectionally bonded glass fibres.

4. A communication cable as claimed in one or more of the Claims 1 to 3, characterized in that the glass fibre elements (10) consist of E-glass.

5. A communication cable as claimed in one or more of the Claims 1 to 4, characterized in that the strand (9, Figure 1) is tubularly arranged about the cable core.

6. A communication cable as claimed in one or more of the Claims 1 to 4, characterized in that several strands (16, 20), in particular formed as round wires, are provided around the cable core equidistantly.

7. A communication cable as claimed in Claim 6, characterized in that the strands (20) are at least partly embedded in the sheath (21).

8. A communication cable as claimed in one or more of the Claims 1 to 7, characterized in that polyester is used as a binder.

**Revendications**

1. Câble de télécommunication optique, constitué par une âme de câble (1, 2, 3, 4, 5, 7; 1, 2, 3, 14, 15, 22) comportant des guides d'ondes lumineuses (1) et une gaine extérieure (9, 12, 16, 17, 20, 21) qui l'enferme et qui est constituée par des éléments de fibres (10) en verre absorbant la traction et noyés dans un liant en matière synthétique (11), éléments de fibres en verre qui sont réunis au moins en une corde (9, 16, 20) qui est entourée d'un revêtement de gaine (12, 17, 21), caractérisé en ce que la part en volume des éléments des fibres (10) en verre dans le toron (9, 16, 20) est d'au moins 70% et dans la gaine extérieure totale (9, 12, 16, 17, 20, 21) d'au moins 10%.

2. Câble de télécommunication selon la revendication 1, caractérisé en ce que les éléments de fibres de verre (10) présentent une part en volume de 80% dans le toron (9, 16, 20).

3. Câble de télécommunication selon la revendication 1 ou 2, caractérisé en ce que les éléments de fibres de verre (10) sont constitués par des fibres de verre reliées de façon unidirectionnelle.

4. Câble de télécommunication selon l'une ou plusieurs des revendications 1 à 3, caractérisé en ce que les éléments de fibres de verre (10) sont constitués par du verre E.

5. Câble de télécommunication selon l'une ou plusieurs des revendications 1 à 4, caractérisé en ce que le toron (9, figure 1) est disposé de façon tubulaire autour de l'âme du câble.

6. Câble de télécommunication selon l'une ou plusieurs des revendications 1 à 4, caractérisé en ce que plusieurs torons (16, 20) sont notamment sous forme de fils circulaires disposés à espacement uniforme autour de l'âme du câble.

7. Câble de télécommunication selon la revendication 6, caractérisé en ce que les torons (20) sont au moins partiellement noyés dans la couche de câble (21).

8. Câble de télécommunication selon l'une ou plusieurs des revendications 1 à 7, caractérisé en ce que du polyester est utilisé comme liant.

FIG.1

FIG.2

FIG.3

FIG.4